# EUROPÄISCHE PATENTANMELDUNG

(11) **EP 2 644 149 A1**
(43) Veröffentlichungstag der Anmeldung: **02.10.2013**
(21) Anmeldenummer: 12002234.8
(22) Anmeldetag: 28.03.2012
(51) Int. Cl.: A61C 1/08

(54) **Bohrhülsenhalter**

(71) Anmelder: Straumann Holding AG, 4002 Basel (CH)
(72) Erfinder: Blumenthal, Silvio, 4002 Basel (CH)
(74) Vertreter: Schaad, Balass, Menzl & Partner AG

(57) **Zusammenfassung**

Die vorliegende Erfindung betrifft einen Hülsenhalter zum Positionieren einer Bohrhülse in einer Bohrschablone umfassend einen Schaft (4) mit einem proximalen Ende (6) und einem dem proximalen Ende in axialer Richtung des Schaftes gegenüberliegend angeordnetem distalen Ende (8), wobei der Schaft (4) einen dem proximalen Ende (6) zugewandten Aufnahmeabschnitt (10) aufweist, welcher dazu bestimmt ist, in einem Aufnahmemittel einer Positionierungseinheit aufgenommen zu werden, und einen dem distalen Ende (8) zugewandten Positionierungsabschnitt (12), welchem Fixiermittel (28, 40) zur lösbaren Fixierung der Bohrhülse relativ zum Hülsenhalter zugeordnet ist, wobei die Fixiermittel ein proximales Fixierelement (28), welches in einem dem proximalen Ende (6) zugewandten Bereich des Positionierungsabschnitts (12) angeordnet ist, und ein distales Fixierelement (40), welches in einem dem distalen Ende (8) zugewandten Bereich des Positionierungsabschnitt (12) angeordnet ist, umfasst. Die Fixierelemente (28, 40) weisen eine dem jeweils anderen Fixierelement zugewandte Anschlagfläche (35 bzw. 49) auf und sind dazu bestimmt, die Bohrhülse über Anschlag mit den Anschlagflächen (35), (49) klemmend zu fixieren. Der Hülsenhalter ist dadurch gekennzeichnet, dass mindestens eines der Fixierelemente (28, 40) entlang des Schaftes (4) relativ zum anderen Fixierelement (28 bzw. 40) verschiebbar ist und sich mindestens eines der Fixierelemente (28, 40) in axialer Richtung zum anderen Fixierelement (28 bzw. 40) hin verjüngt.

## Beschreibung

Die vorliegende Erfindung betrifft einen Hülsenhalter zum Positionieren einer Bohrhülse in einer Bohrschablone, gemäss dem Oberbegriff des Anspruchs 1, sowie ein Set zur Bereitstellung eines solchen Hülsenhalters.

Die Verwendung von Dentalimplantaten als künstlichen Ersatz für Zahnwurzeln hat sich in den letzten Jahren etabliert. Es gibt verschiedene Formen von Dentalimplantaten, wobei sich insbesondere die schraubenförmigen Implantate bewährt haben. Solche schraubenförmige Implantate werden zum Beispiel in WO 97/49351 beschrieben.

Schraubenförmige Dentalimplantate bestehen üblicherweise aus einem Verankerungsteil zur Verankerung des Implantats im Knochen und einem Aufbauteil, auf dem eine Suprakonstruktion, beispielsweise eine Krone, befestigt werden kann.

Zur Verankerung des Dentalimplantats im Knochen wird dieses in ein passendes, mittels eines Bohrers präpariertes Implantatbett eingeschraubt.

Um eine optimale Implantationsachse zu gewährleisten, wird für die Präparation des Implantatbetts im Kieferknochen üblicherweise eine Bohrschablone, auch "Template" genannt, verwendet. Solche Bohrschablonen dienen dazu, Dentalbohrer zu führen und ein Abrutschen oder Abknicken während des Bohrprozesses zu verhindern. Eine Bohrschablone ist derart ausgestaltet, dass sie für die Präparationen von einer oder mehreren Implantationsstellen verwendet werden kann.

Sie weist ein oder mehrere Bohrlöcher auf, in welche die Dentalbohrer vor dem Bohren eingeführt werden. Die Bohrschablone wird typischerweise mithilfe eines Computers modelliert (CAM). Alternativ ist aber auch eine Modellierung von Hand möglich.

Oft werden standardisierte Bohrhülsen in die Bohrlöcher der Bohrschablone eingebracht, beispielsweise indem sie einpolymerisiert oder eingepresst werden, um die Präzision der Bohrung weiter zu erhöhen. Solche Verfahren sind zum Beispiel in WO 97/43981, WO 99/26540, US 5,015,183 und WO 2006/041430 offenbart.

Die Bohrhülsen sind typischerweise hohlzylinderförmig und bestehen aus Metall. Während des Bohrvorgangs dient die kreiszylinderförmige Innenoberfläche der Bohrhülse als Führung für den Dentalbohrer. Bei der sequentiellen Verwendung von mehreren Bohrern mit unterschiedlichem Durchmesser für ein einzelnes Bohrloch im Knochen ist es unter Umständen nötig, jeweils ein weiteres, an den jeweiligen Durchmesser des Bohrers angepasstes Führungselement (z. B. einen Bohrlöffel oder eine Reduktionshülse) in die Bohrhülse einzuführen. Bohrprozesse, bei denen weitere Führungselemente eingesetzt werden, sind beispielsweise in WO 2006/130067 oder in DE 10 2005 023 028 beschrieben.

Durch die in der Bohrschablone fixierte Bohrhülse wird aber nicht nur die Bohrachse und damit die Implantationsachse bestimmt: Die Bohrhülse kann ausserdem auch dazu verwendet werden, die maximale Bohrtiefe festzulegen. Dabei dient der obere, koronale Rand der Bohrhülse als Anschlagfläche für ein Stoppelement, das beispielsweise am Dentalbohrer angeordnet ist. Je nachdem wie tief die Bohrhülse also in die Bohrschablone eingeführt ist, ist auch die maximale Bohrtiefe grösser oder kleiner.

Aus diesem Grund ist ein exaktes Positionieren der Bohrhülse in der Bohrschablone von grosser Wichtigkeit. Insbesondere einem weniger geübten Anwender dürfte die korrekte Platzierung der Bohrhülsen in der Bohrschablone von Hand aber schwer fallen.

Diesem Umstand trägt etwa DE 20 2010 004 463.4 Rechnung, die sich mit der Aufgaben befasst, Mittel zur Verfügung zu stellen, mit dessen Hilfe die gewünschte Achse und Tiefe einer Bohrhülse in der Bohrschablone exakt vorgegeben und die Bohrhülse auf einfache Art und Weise zuverlässig positioniert werden kann.

Dabei schlägt die DE 20 2010 004 463.4 einen Hülsenhalter vor, bei dem die Bohrhülse mittels einer Befestigungseinheit am Hülsenhalter fixiert wird. Konkret wird dabei ein Verschieben der Bohrhülse durch Formschluss verhindert, in axialer Richtung etwa durch eine (weitere) Anschlagfläche am Hülsenhalter und in radialer Richtung durch einen kreiszylinderförmigen Bereich, dessen Durchmesser demjenigen des Hohlraums der Bohrhülse entspricht.

Entsprechende Hülsenhalter sind somit stets genau auf den Innendurchmesser der Bohrhülse ausgelegt. Für Bohrhülsen mit sich unterscheidenden Innendurchmessern ist somit in jedem Fall ein eigens dafür geeigneter Hülsenhalter einzusetzen.

Vor diesem Hintergrund liegt die Aufgabe der vorliegenden Erfindung darin, einen Hülsenhalter zur Verfügung zu stellen, mit dem eine Vielzahl sich insbesondere im Innendurchmesser unterscheidender Bohrhülsen fixiert und schliesslich in der Bohrschablone positioniert werden kann.

Diese Aufgabe wird durch den Gegenstand des Anspruchs 1 gelöst. Bevorzugte Ausführungsformen sind in den abhängigen Ansprüchen wiedergegeben.

Somit betrifft die vorliegende Erfindung einen Hülsenhalter zum Positionieren einer Bohrhülse in einer Bohrschablone umfassend einen Schaft mit einem proximalen Ende und einem dem proximalen Ende in axialer Richtung des Schaftes gegenüberliegend angeordnetem distalen Ende. Der Schaft weist einen dem proximalen Ende zugewandten Aufnahmeabschnitt auf, welcher dazu bestimmt ist, in einem Aufnahmemittel einer (in der Regel computergesteuerten) Positionierungseinheit aufgenommen zu werden.

Der Schaft weist zudem einen dem distalen Ende zugewandten Positionierungsabschnitt auf. Diesem sind Fixiermittel zur lösbaren Fixierung der Bohrhülse relativ zum Hülsenhalter zugeordnet, wobei die Fixiermittel ein proximales Fixierelement, welches in einem dem proximalen Ende zugewandten Bereich des Positionierungsabschnitts angeordnet ist, und ein distales Fixierelement, welches in einem dem distalen Ende zugewandten Bereich des Positionierungsabschnitt angeordnet ist, umfasst. Die Fixierelemente weisen eine dem jeweils anderen Fixierelement zugewandte Anschlagfläche auf und sind dazu bestimmt, die Bohrhülse über Anschlag mit den Anschlagflächen klemmend zu fixieren.

Erfindungsgemäss ist nun mindestens eines der Fixierelemente entlang des Schaftes relativ zum anderen Fixierelement verschiebbar, wobei sich mindestens eines der Fixierelemente in axialer Richtung zum anderen Fixierelement hin verjüngt.

In der Regel ist die Anschlagfläche als eine den Schaft umlaufende Fläche ausgebildet. Insbesondere ist die Anschlagfläche rotationssymmetrisch bezüglich der Achse des Schaftes ausgebildet.

Die Verjüngung kann dabei stetig oder gestuft ausgebildet sein. Vorzugsweise ist die Anschlagfläche des mindestens einen sich verjüngenden Fixierelements konisch ausgebildet. Die Anschlagfläche entspricht somit der Mantelfläche eines Kegels bzw. Kegelstumpfs, welcher koaxial zum Schaft ausgerichtet ist.

Dankbar ist, dass lediglich eines der beiden Fixierelemente sich in axialer Richtung zum anderen Fixierelement hin verjüngt. Alternativ ist aber auch denkbar, dass beide Fixierelemente sich in axialer Richtung zum jeweils anderen Fixierelement hin verjüngen.

Weiter ist denkbar, dass lediglich eines der Fixierelemente entlang des Schaftes relativ zum anderen Fixierelement verschiebbar ist. Alternativ ist aber auch denkbar, dass beide Fixierelemente entlang des Schaftes verschiebbar sind.

Die erfindungsgemässe Ausgestaltung des Hülsenhalters erlaubt es, nicht nur Bohrhülsen unterschiedlicher Längen (also unterschiedlicher Ausdehnungen in axialer Richtung), sondern auch unterschiedlicher Innendurchmesser zuverlässig zu fixieren.

Die Fixierung kommt dabei derart zustande, dass die Bohrhülse zwischen den beiden Fixierelementen eingespannt wird, indem die Fixierelemente mit der dazwischen angeordneten Bohrhülse aufeinander zugeschoben werden, bis die Anschlagfläche der Fixierelemente mit der jeweiligen Gegenanschlagfläche der Bohrhülse in Anschlag kommt. Die eigentliche Kontaktfläche der Bohrhülse bzw. des Fixierelements stellt dabei eine Ringfläche dar, welche durch den Innenradius der Bohrhülse definiert wird.

Aufgrund der sich verjüngenden Ausgestaltung mindestens eines Fixierelements - und insbesondere bei konischer Ausgestaltung der Anschlagfläche - wird gewährleistet, dass auch bei der Verwendung von Bohrhülsen unterschiedlicher Innendurchmesser stets ein satter Kontakt und somit eine zuverlässige Fixierung gewährleistet wird.

Gemäss einer besonders bevorzugten Ausführungsform ist das proximale Fixierelement in Form einer Konusmutter ausgebildet; der Schaft weist dabei ein dem Innengewinde der Konusmutter entsprechendes Aussengewinde auf. Besagte Ausführungsform erlaubt es nicht nur, das proximale Fixierelement einfach und kontrolliert entlang des Schaftes zu verschieben, sondern auch, dass eine relativ hohe Klemmkraft und somit eine sehr gute Fixierung der Bohrhülse erhalten wird.

Weiter ist bevorzugt, dass das proximale Fixierelement sich von einem Aussendurchmesser A1 im Bereich von 5 mm bis 8 mm, bevorzugt 6 mm bis 8 mm, besonders bevorzugt ca. 7.1 mm, bis zu einem Aussendurchmesser A2 im Bereich von 3.0 mm bis 3.5 mm verjüngt. Hierdurch wird gewährleistet, dass praktisch alle gängigen Bohrhülsen sicher fixiert werden können, da diese in der Regel über einen geringeren Innendurchmesser als A1 verfügen.

Wie erwähnt, kann auch die Anschlagfläche des distalen Fixierelements konisch ausgebildet sein. Gemäss einer bevorzugten Ausführungsform liegt die Anschlagfläche des distalen Fixierelements aber in einer rechtwinklig zur axialen Richtung verlaufenden Ebene. Insbesondere liegt sie dabei als Ringfläche vor. Dadurch wird eine optimale Verteilung der Klemmkraft gewährleistet.

Gemäss einer sehr einfachen und daher besonders bevorzugten Ausführungsform liegt das distale Fixierelement in Form einer einseitig geschlossenen Mutter mit einem Sacklochgewinde vor; dabei weist der Schaft im Bereich seines distalen Endes ein dem Sacklochgewinde entsprechendes Aussengewinde auf.

Um zu gewährleisten, dass die Bohrhülse auf der Anschlagfläche des distalen Fixierelements aufliegt und somit eine klemmende Fixierung ermöglicht wird, ist der Aussendurchmesser der Anschlagfläche des distalen Fixierelements in der Regel grösser als der Innendurchmesser der zu fixierenden Bohrhülse, in jedem Fall aber kleiner als das Bohrloch, in das die Bohrhülse eingesetzt werden soll. Vorzugsweise ist der Aussendurchmesser der Anschlagfläche des distalen Fixierelements nur geringfügig kleiner als der Durchmesser des Bohrloches.

Oft wird die Bohrhülse in ein Bohrloch eingesetzt, welches einen standardmässigen Durchmesser von 7.3 mm aufweist. Gemäss einer bevorzugten Ausführungsform ist der Aussendurchmesser besagter Anschlagfläche somit kleiner als 7.3 mm, besonders bevorzugt nur geringfügig kleiner als 7.3 mm.

Der Aussendurchmesser der Bohrhülse beträgt vorzugsweise maximal 7.2 mm; eine solche Bohrhülse ist somit ausreichend klein, um in einem Bohrloch mit einem standardmässigen Durchmesser von 7.3 mm positioniert zu werden. Liegt der Aussendurchmesser der Bohrhülse bei ca. 7.2 mm, so ist bei der Einpolymerisierung lediglich ein sehr geringer Spalt zwischen der Aussenwand der Bohrhülse und der Innenwand des Bohrloches mit Polymerisationsmasse aufzufüllen, was aus offensichtlichen Gründen von Vorteil ist.

Der Innendurchmesser von standardmässig verwendeten Bohrhülsen korrespondiert üblicherweise mit dem Aussendurchmesser der standardmässig verwendeten Dentalimplantate und somit auch mit demjenigen von üblichen Dentalbohrern. Typischerweise liegt der Innendurchmesser der Bohrhülse in einem Bereich von ca. 4.0 mm bis ca. 6.3 mm.

Die Höhe der Bohrhülse, also deren Ausdehnung in axialer Richtung, liegt vorzugsweise zwischen 3.5 mm und 8.0 mm.

Im Rahmen dieser Anmeldung gilt für alle Masse, die als "etwa X mm" bezeichnet werden, ein Toleranzbereich von ± 0.5 mm.

Wie oben angedeutet, ist je nach Aussendurchmesser der einzusetzenden Bohrhülse ein mehr oder weniger grosser Spalt zwischen Bohrlochinnenwand und Bohrhülsenaussenwand mit Polymerisationsmasse aufzufüllen.

Idealerweise ist dieser Spalt so gering wie möglich. Aus diesem Grund kann es bei der Verwendung von Bohrhülsen mit relativ geringem Durchmesser erwünscht sein, vom standardmässig verwendeten Bohrlochdurchmesser von 7.3 mm abzuweichen und Bohrlöcher von geringerem Durchmesser vorzusehen. In diesem Fall kann es notwendig werden, je nach Bohrloch und Bohrhülse distale Fixierelemente mit unterschiedlichen Aussendurchmessern vorzusehen.

Gemäss einem weiteren Aspekt betrifft die vorliegende Erfindung ein Set zur Bereitstellung eines oben beschriebenen Hülsenhalters umfassend einen Schaft, ein proximales Fixierelement und mindestens ein distales Fixierelement. Schaft, proximales Fixierelement und distales Fixierelement können im Set dabei als separate Komponenten vorliegen. Da es wie erwähnt vorteilhaft sein kann, distale Fixierelemente mit unterschiedlichen Aussendurchmessern vorzusehen, umfasst das Set vorzugsweise eine Mehrzahl distaler Fixierelemente, die sich mindestens im Aussenradius ihrer Anschlagflächen unterscheiden.

Wie erwähnt kann mittels des erfindungsgemässen Hülsenhalters die Bohrhülse mithilfe einer computergesteuerten Positionierungseinheit in die Bohrschablone eingebracht werden. Gemäss einer bevorzugten Ausführungsform umfasst das erwähnte Set somit zusätzlich eine Positionierungseinheit, vorzugsweise eine computergesteuerte Positionierungseinheit. Dadurch können Ungenauigkeiten beim Platzieren der Bohrhülse vermieden werden, welche wiederum zu Komplikationen bei der Präparation des Implantatbettes hätten führen können.

Der Hülsenhalter wird mit der computergesteuerten Positionierungseinheit verbunden, indem der an seinem Schaft angeordnete Aufnahmeabschnitt im Aufnahmemittel der computergesteuerten Positionierungseinheit verankert wird. Dabei wird der Aufnahmeabschnitt des Hülsenhalters beispielsweise mittels eines Rotationshebels fixiert, ähnlich wie ein Bohrer in einer Bohrmaschine.

Alternativ dazu ist es aber auch möglich, dass der Hülsenhalter mittels eines Schnappverschlusses, eines Bajonettverschlusses oder durch Festschrauben mit der computergesteuerten Positionierungseinheit verbunden wird.

Um der computergesteuerten Positionierungseinheit zu erlauben, sich im Raum zu "orientieren", weist der erfindungsgemässe Hülsenhalter vorzugsweise ein Referenzelement zum Bestimmen einer Nullebene auf.

Vor dem Einbringen einer Bohrhülse in die Bohrschablone wird mithilfe des Referenzelements eine Nullebene im Raum festgelegt und die Orientierung und Lage der Bohrschablone relativ zu dieser Nullebene bestimmt. Durch Eingabe der (in der Regel aus dem computergesteuerten Modellieren der Bohrschablone) vorhandenen Daten bezüglich Grösse und Form der Bohrschablone sowie bezüglich der relativen Lage der in der Bohrschablone enthaltenen Bohrlöcher, in welche die Bohrhülsen eingeführt werden sollen, wird die computergesteuerte Positionierungseinheit in die Lage versetzt, die Bohrhülse(n) in einem automatischen Verfahren korrekt in der Bohrschablone zu positionieren.

Alternativ ist es auch möglich, dass die computergesteuerte Positionierungseinheit auch bereits für das Anbringen der Bohrlöcher in der Bohrschablone verwendet wird. In diesem Falle wird die Nullebene vorzugsweise bereits vor dem Bohren der Schablonen-Löcher bestimmt und während des Bohr- und Positionierungsverfahrens beibehalten.

Denkbar ist, dass das Referenzelement vom Schaft bzw. einem definierten Punkt am Schaft gebildet wird.

Vorzugsweise wird das Referenzelement vom distalen Fixierelement gebildet. Durch die Anordnung des Referenzelements am distalen, d.h. dem von der Positionierungseinheit entfernten Ende des Hülsenhalters, wird die Bestimmung der Nullebene erleichtert: Das Referenzelement kann einfach mit der gewünschten Nullebene in Kontakt gebracht werden, beispielsweise, in dem es darauf abgestützt wird.

Diesbezüglich bevorzugt ist, dass sich das distale Fixierelement in Richtung zum distalen Ende hin konisch verjüngt. Mithin weist das Referenzelement eine zulaufende Spitze auf, welche mit der Nullebene punktgenau in Kontakt gebracht werden kann.

Im Interesse einer einfachen und sicheren Handhabbarkeit ist das distale Fixierelement an seinem dem distalen Ende zugewandten Ende vorzugsweise abgerundet. Besonders bevorzugt weist das distale Fixierelement in seinem dem distalen Ende zugewandten Endbereich somit die Form eines Konus mit abgerundeter Spitze auf. Denkbar ist aber auch, dass das Referenzelement in Form einer Kugel oder eines Kugelsegments vorliegt, welche/s ebenfalls eine punktgenaue Koordinatenbestimmung ermöglicht, indem sie/es mit der Nullebene in Kontakt gebracht wird.

Um zu gewährleisten, dass die Lage des distalen Fixierelements (bzw. der abgerundeten Spitze davon) bezüglich des Schaftes stets identisch und genau definiert ist, weist der Schaft vorzugsweise eine zwischen den Fixierelementen angeordnete Stoppfläche auf, welche dazu bestimmt ist, mit der Anschlagfläche des distalen Fixierelements in Anschlag zu kommen.

Wie oben erwähnt ist es für die Positionierung der Bohrhülse notwendig, dass der in das Bohrloch eingeführte distale Endbereich über einen maximalen Aussendurchmesser verfügt, der kleiner ist als der Durchmesser des Bohrlochs. In der Regel wird der maximale Aussendurchmesser durch den Durchmesser der Anschlagfläche des distalen Fixierelements definiert, welcher in jedem Fall grösser sein muss also der Innendurchmesser der Bohrhülse, damit diese in satten Anschlag mit letzterem kommt.

Nach dem Platzieren wird die Bohrhülse typischerweise in die Bohrschablone einpolymerisiert, um ein Verrutschen zu verhindern.

Aufgrund der Ausgestaltung des erfindungsgemässen Hülsenhalters erlaubt es dieser, das Innere der Bohrhülse mittels des proximalen und des distalen Fixiermittels komplett abzudichten. Somit kann sichergestellt werden, dass kein Material, insbesondere keine Polymerisationsmasse, ins Innere der Bohrhülse gelangt, was ein weiterer Vorteil der vorliegenden Erfindung darstellt.

Sobald die Bohrhülse festsitzt, kann sie wieder vom Hülsenhalter gelöst und dieser aus der Bohrschablone entfernt werden. Dies geschieht in der Regel dadurch, dass sowohl das proximale, als auch das distale Fixierelement vom Schaft gelöst werden und letzterer aus der Bohrhülse geführt wird.

Die Erfindung wird anhand der Zeichnung weiter illustriert.

Es zeigt:
- Fig. 1: eine Seitenansicht eines Teils eines erfindungsgemässen Hülsenhalters;
- Fig. 2: ein Längsschnitt durch den in Fig. 1 gezeigten Teil des erfindungsgemässen Hülsenhalters entlang der Schnittebene A-A;
- Fig. 3: eine Seitenansicht eines distalen Fixierelements für den erfindungsgemässen Hülsenhalter gemäss Fig. 1 und 2;
- Fig. 4: ein Längsschnitt durch das distale Fixierelement gemäss Fig. 3 entlang der Schnittebene A'-A';
- Fig. 5: eine Seitenansicht eines erfindungsgemässen Hülsenhalters mit daran angeordneter Bohrhülse vor der Fixierung derselben; und
- Fig. 6: ein Längsschnitt des in Fig. 5 gezeigten Hülsenhalters mit Bohrhülse entlang der Schnittebene A"-A".

Der erfindungsgemässe Hülsenhalter 2 umfasst einen Schaft 4 mit einem proximalen Ende 6 und einem dem proximalen Ende in (mittels strichpunktierter Linie angedeuteter) axialer Richtung des Schaftes gegenüberliegend angeordnetem distalen Ende 8, welches somit vom proximalen Ende 6 um die Länge 1 des Schaftes 4 beabstandet ist.

Der Schaft 4 weist einen dem proximalen Ende 6 zugewandten Aufnahmeabschnitt 10 auf, welcher dazu bestimmt ist, in einem Aufnahmemittel einer computergesteuerten Positionierungseinheit (nicht gezeigt) aufgenommen zu werden.

Der Schaft 4 weist zudem einen dem distalen Ende zugewandten Positionierungsabschnitt 12 auf. Dieser weist in Richtung zum distalen Ende 8 hin aufeinanderfolgend einen ersten Aussengewindeabschnitt 14 mit einem ersten Aussengewinde 16, einen Zwischenabschnitt 18 und einen im Bereich des distalen Endes 8 angeordneten zweiten Aussengewindeabschnitt 20 mit einem zweiten Aussengewinde 22 auf. Der Durchmesser des zweiten Aussengewindes 22 ist dabei geringer ist als derjenige des ersten Aussengewindes 16. Zwischen dem Zwischenabschnitt 18 und dem zweiten Aussengewindeabschnitt 20 ist ein radial umlaufender Vorsprung 24 ausgebildet, welcher auf seiner dem distalen Ende 8 zugewandten Seite eine in einer rechtwinklig zur Achse des Schaftes verlaufende, ringförmige Stoppfläche 26 ausbildet.

Der Hülsenhalter weist zudem ein proximales Fixierelement 28 auf, welches in einem dem proximalen Ende 6 zugewandten Bereich des Positionierungsabschnitts 12 angeordnet ist. Dieses liegt in Form einer Konusmutter 29 vor, wobei die Mantelfläche 30 der Konusmutter 29 ein erstes, dem proximalen Ende 6 des Schaftes 4 zugewandtes Mantelflächensegment 32 in Form einer Kreiszylindermantelfläche und ein zweites, dem distalen Ende 8 des Schaftes 4 zugewandtes Mantelflächensegment 34, welches in Form einer eine Anschlagfläche 35 bildenden Kegelstumpfmantelfläche vorliegt, die sich in Richtung zum distalen Ende 8 des Schaftes 4 hin verjüngt. Der Öffnungswinkel des Kegels beträgt in der gezeigten Ausführungsform ca. 60°.

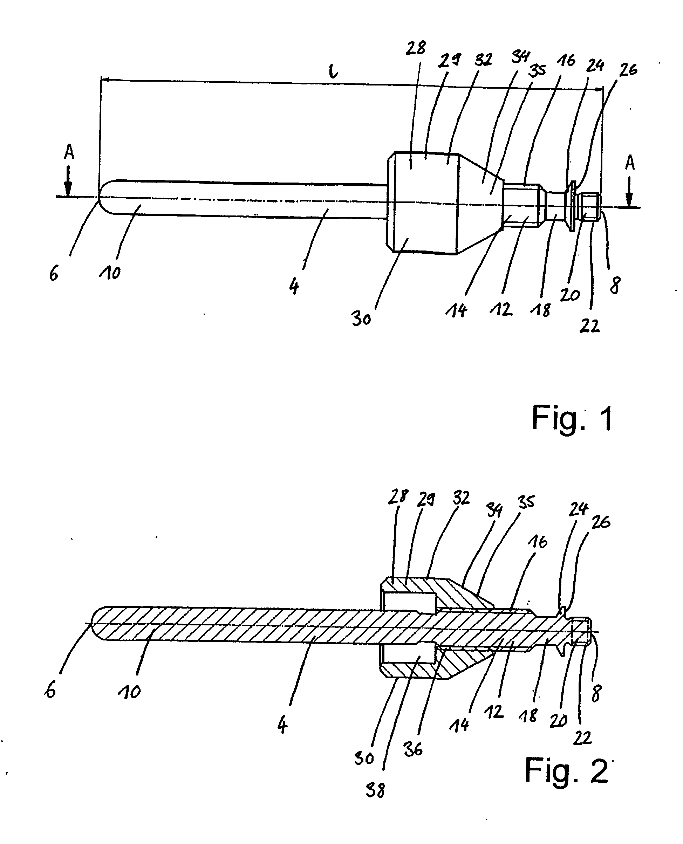

Wie insbesondere aus Fig. 2 ersichtlich ist, weist die Konusmutter 29 ein Innengewinde 36 auf, welches in deren dem distalen Ende 8 zugewandten Bereich angeordnet ist. In Richtung zum proximalen Ende 6 hin schliesst sich an das Innengewinde 36 ein kreiszylinderförmiger Hohlraum 38 mit grösserem Innendurchmesser als das Innengewinde 36 an.

Da der Durchmesser des Innengewindes 36 der Konusmutter 29 grösser ausgestaltet ist als der Durchmesser des Aufnahmeabschnitts 10, kann die als separate Komponente vorliegende Konusmutter 29 über den Aufnahmeabschnitt 10 geschoben werden. Schliesslich kann die Konusmutter 29 durch Drehung um die Längsachse über das in das erste Aussengewinde 16 des Schaftes 4 eingreifende Innengewinde 36 kontrolliert in axialer Richtung verschoben werden, um etwa zu der in Fig. 1 bzw. 2 gezeigten Situation zu gelangen.

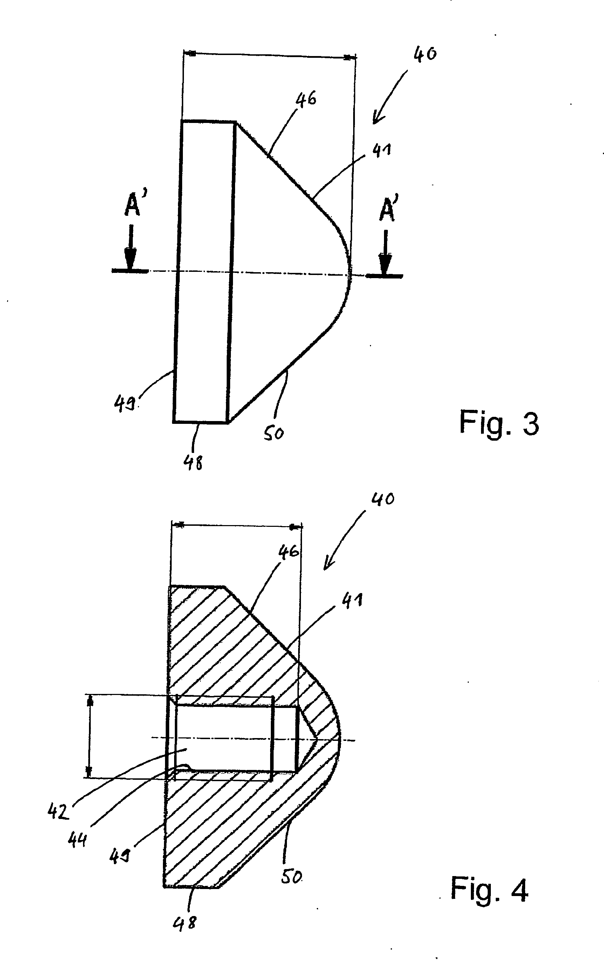

Das in den Fig. 3 und 4 gezeigte distale Fixierelement 40 ist in Form einer einseitig geschlossenen Mutter 41 ausgebildet. Diese weist eine sacklochförmige Ausnehmung 42 mit einem Sacklochgewinde 44 auf, welches dem zweiten Aussengewinde 22 des Schaftes 4 entspricht.

Die Mantelfläche 46 des distalen Fixierelements 40 weist ein erstes Mantelflächensegment 48 in Form einer Kreiszylinderfläche und daran anschliessend ein zweites Mantelflächensegment 50 in Form einer Konusmantelfläche mit abgerundeter Spitze auf. Die der Kreiszylinderfläche des ersten Mantelflächensegments 48 entsprechende und eine Anschlagfläche 49 bildende Grundfläche ist somit ringförmig ausgestaltet, wobei der innere Durchmesser dem Durchmesser der Ausnehmung 42 entspricht. Der entsprechende Konus des distalen Fixierelements 40 bzw. dessen zweiten Mantelflächensegments 50 weist in der gezeigten Ausführungsform einen Öffnungswinkel von ca. 90° auf.

Zur Fixierung einer Bohrhülse 52 wird diese am distalen Endbereich des Schaftes 4 zwischen dem proximalen Fixierelement 28 und dem distalen Fixierelement 40 angeordnet. In der Regel wird hierzu die Bohrhülse 52, welche die Form eines Hohlzylinders mit kreisrunder Kontur aufweist, über das distale Ende 8 des Schaftes 4 mit dem bereits daran angeordneten proximalen Fixierelement 28 aufgebracht und schliesslich das distale Fixierelement 40 über das entsprechende zweite Aussengewinde 22 auf das distale Ende 8 des Schaftes 4 aufgeschraubt, bis die Anschlagfläche 49 des distalen Fixierelements 40 mit der Stoppfläche 26 in Anschlag kommt.

In Analogie dazu ist auch denkbar, dass die Bohrhülse 52 über das proximale Ende 6 des Schaftes 4, an dessen distalem Ende 8 das distale Fixierelement 40 bereist vormontiert wurde, aufgeschoben wird und erst im Anschluss darauf das proximale Fixierelement 28 auf den Schaft 4 aufgeschraubt wird.

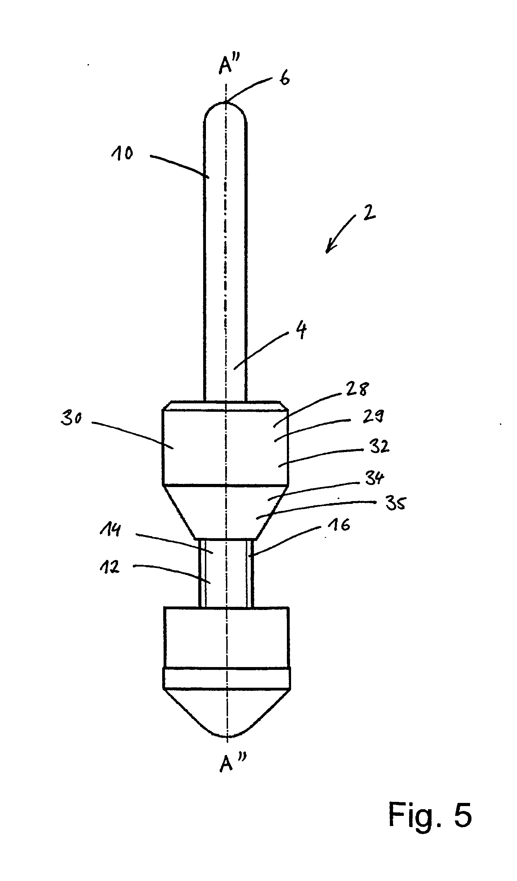

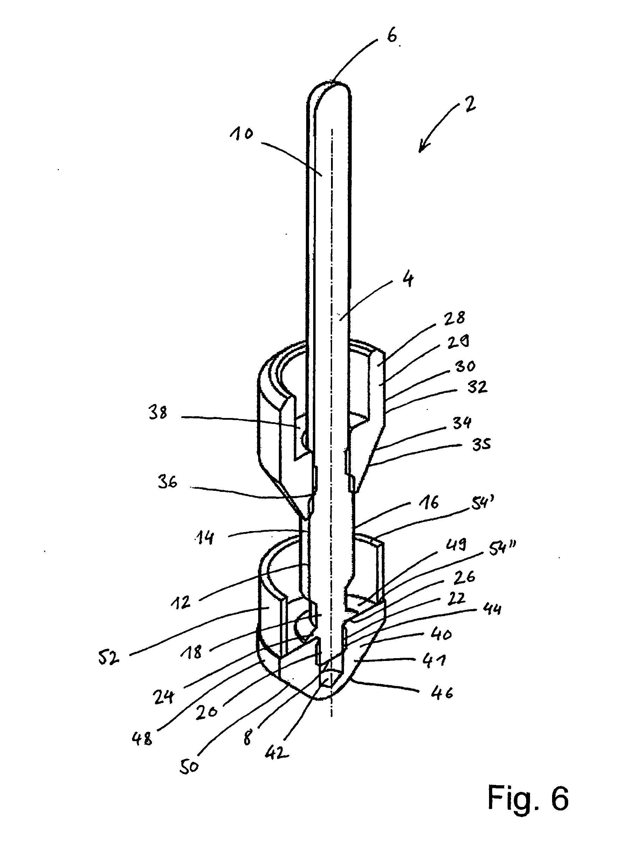

Ein entsprechender erfindungsgemässer Hülsenhalter 2 mit daran angeordneter Bohrhülse 52 ist in den Fig. 5 und 6 gezeigt.

Ausgehend von der in Fig. 5 und 6 gezeigten Situation wird dann das proximale Fixierelement 28 in Richtung zum distalen Fixierelement 40 hin verschoben, bis die Fixierelemente 28, 40 bzw. deren Anschlagflächen 35, 49 in sattem Kontakt mit der jeweiligen Stirnfläche 54', 54" der Bohrhülse 52 stehen, wodurch letztere klemmend gehalten und relativ zum Hülsenhalter 2 fixiert wird.

Der Hülsenhalter 2 mit der daran fixierten Bohrhülse 52 wird dann in einer dem Fachmann bekannten Weise an der Positionierungseinheit (nicht gezeigt) befestigt. Zur Bestimmung der Nullebene wird der Hülsenhalter 2 mit der Bohrhülse 52 mittels der Positionierungseinheit abgesenkt, bis die abgerundete Spitze des distalen Fixierelements 40 in Berührung mit einer relativ zum Aufnahmemittel der Positionierungseinheit definiert angeordneten Nullebene-Schablone (sog. "zero-master") kommt, worauf die Positionierungseinheit auf den Wert 0 kalibriert wird.

Der Hülsenhalter 52 wird dann angehoben, sodass die Nullebene-Schablone entfernt und durch die Bohrschablone (mit dem entsprechende "Master-Modell") ersetzt werden kann, worauf die Bohrhülse in einer dem Fachmann bekannten Weise in der Bohrschablone positioniert und einpolymerisiert wird. Danach werden in der Regel beide Fixierelemente 28, 40 abgeschraubt, worauf der Schaft 4 durch die Bohrhülse 52 hindurchgeführt und somit entfernt werden kann.

### Referenzzeichenliste

- 2: Hülsenhalter
- 4: Schaft
- 6: proximales Ende des Schaftes
- 8: distales Ende des Schaftes
- 10: Aufnahmeabschnitt
- 12: Positionierungsabschnitt
- 14: erster Aussengewindeabschnitt
- 16: erstes Aussengewinde
- 18: Zwischenabschnitt
- 20: zweiter Aussengewindeabschnitt
- 22: zweites Aussengewinde
- 24: Vorsprung
- 26: Stoppfläche
- 28: proximales Fixierelement
- 30: Mantelfläche des proximalen Fixierelements (Konusmutter)
- 32: erstes Mantelflächensegment des proximalen Fixierelements
- 34: zweites Mantelflächensegment des proximalen Fixierelements
- 35: Anschlagfläche des proximalen Fixierelements
- 36: Innengewinde der Konusmutter
- 38: kreiszylinderförmiger Hohlraum der Konusmutter
- 40: distales Fixierelement
- 41: einseitig geschlossene Mutter
- 42: sacklochförmige Ausnehmung
- 44: Sacklochgewinde
- 46: Mantelfläche des distalen Fixierelements
- 48: erstes Mantelflächensegment
- 49: Anschlagfläche des distalen Fixierelements
- 50: zweites Mantelflächensegment
- 52: Bohrhülse
- 54', 54": Stirnflächen der Bohrhülse

## Patentansprüche

1. Hülsenhalter zum Positionieren einer Bohrhülse in einer Bohrschablone umfassend einen Schaft (4) mit einem proximalen Ende (6) und einem dem proximalen Ende in axialer Richtung des Schaftes gegenüberliegend angeordnetem distalen Ende (8), wobei der Schaft (4) einen dem proximalen Ende (6) zugewandten Aufnahmeabschnitt (10) aufweist, welcher dazu bestimmt ist, in einem Aufnahmemittel einer Positionierungseinheit aufgenommen zu werden, und einen dem distalen Ende (8) zugewandten Positionierungsabschnitt (12), welchem Fixiermittel (28, 40) zur lösbaren Fixierung der Bohrhülse relativ zum Hülsenhalter zugeordnet ist, wobei die Fixiermittel ein proximales Fixierelement (28), welches in einem dem proximalen Ende (6) zugewandten Bereich des Positionierungsabschnitts (12) angeordnet ist, und ein distales Fixierelement (40), welches in einem dem distalen Ende (8) zugewandten Bereich des Positionierungsabschnitt (12) angeordnet ist, umfasst, die Fixierelemente (28, 40) eine dem jeweils anderen Fixierelement zugewandte Anschlagfläche (35 bzw. 49) aufweisen und dazu bestimmt sind, die Bohrhülse über Anschlag mit den Anschlagflächen (35), (49) klemmend zu fixieren, **dadurch gekennzeichnet, dass** mindestens eines der Fixierelemente (28, 40) entlang des Schaftes (4) relativ zum anderen Fixierelement (28 bzw. 40) verschiebbar ist und sich mindestens eines der Fixierelemente (28, 40) in axialer Richtung zum anderen Fixierelement (28 bzw. 40) hin verjüngt.

2. Hülsenhalter gemäss Anspruch 1, **dadurch gekennzeichnet, dass** die Anschlagfläche (35 bzw. 49) des mindestens einen sich verjüngenden Fixierelements (28 bzw. 40) konisch ausgebildet ist.

3. Hülsenhalter gemäss Anspruch 1 oder 2, **dadurch gekennzeichnet, dass** das proximale Fixierelement (28) in Form einer Konusmutter (29) ausgebildet ist, und der Schaft (4) ein dem Innengewinde (36) der Konusmutter (29) entsprechendes Aussengewinde (16) aufweist.

4. Hülsenhalter gemäss einem der vorhergehenden Ansprüche, **dadurch gekennzeichnet, dass** das proximale Fixierelement (28) sich von einem Aussendurchmesser A1 im Bereich von 5 mm bis 8 mm, bevorzugt 6 mm bis 8 mm, besonders bevorzugt ca. 7.1 mm, bis zu einem Aussendurchmesser A2 im Bereich von 3.0 mm bis 3.5 mm verjüngt.

5. Hülsenhalter gemäss einem der vorhergehenden Ansprüche, **dadurch gekennzeichnet, dass** die Anschlagfläche (49) des distalen Fixierelements (40) in einer rechtwinklig zur axialen Richtung verlaufenden Ebene liegt.

6. Hülsenhalter gemäss einem der vorhergehenden Ansprüche, **dadurch gekennzeichnet, dass** das distale Fixierelement (40) in Form einer einseitig geschlossenen Mutter (41) mit einem Sacklochgewinde (44) vorliegt, und der Schaft (4) im Bereich seines distalen Endes (8) ein dem Sacklochgewinde (44) entsprechendes Aussengewinde (22) aufweist.

7. Hülsenhalter gemäss einem der vorhergehenden Ansprüche, **dadurch gekennzeichnet, dass** der Aussendurchmesser der Anschlagfläche (49) des distalen Fixierelements (40) kleiner als 7.3 mm, bevorzugt nur geringfügig kleiner als 7.3 mm, besonders bevorzugt ca. 7.2 mm ist.

8. Hülsenhalter gemäss einem der vorhergehenden Ansprüche, **dadurch gekennzeichnet, dass** sich das distale Fixierelement (40) in Richtung zum distalen Ende (8) hin konisch verjüngt.

9. Hülsenhalter gemäss einem der vorhergehenden Ansprüche, **dadurch gekennzeichnet, dass** das distale (40) Fixierelement an seinem dem distalen Ende (8) zuwandten Ende abgerundet ist.

10. Hülsenhalter gemäss einem der vorhergehenden Ansprüche, **dadurch gekennzeichnet, dass** der Schaft (4) eine zwischen den Fixierelementen (28, 40) angeordnete Stoppfläche (26) aufweist, welche dazu bestimmt ist, mit der Anschlagfläche (49) des distalen Fixierelements (40) in Anschlag zu kommen.

11. Set zur Bereitstellung eines Hülsenhalters (2) gemäss einem der vorhergehenden Ansprüche umfassend einen Schaft (4), ein proximales Fixierelement (28) und mindestens ein diestales Fixierelemente (40).

12. Set gemäss Anspruch 11, **dadurch gekennzeichnet, dass** es eine Mehrzahl distaler Fixierelemente (40) umfasst, die sich mindestens im Aussenradius ihrer Anschlagflächen (49) unterscheiden.

13. Set nach Anspruch 11 oder 12, zusätzlich umfassend eine Positionierungseinheit, vorzugsweise eine computergesteuerte Positionierungseinheit.
